(19) **Europäisches Patentamt**
**European Patent Office**
**Office européen des brevets**

(11) **EP 1 513 212 B1**

(12) **EUROPEAN PATENT SPECIFICATION**

(45) Date of publication and mention
of the grant of the patent:
**20.05.2009 Bulletin 2009/21**

(51) Int Cl.:
**H01M 8/10** (2006.01)

(21) Application number: **04254731.5**

(22) Date of filing: **06.08.2004**

(54) **Solid polymer electrolyte membrane and fuel cell**

Festpolymerelektrolytmenbran und Brennstofzelle

Membrane à électrolyte polymère solide et pile à combustible

(84) Designated Contracting States:
**AT BE BG CH CY CZ DE DK EE ES FI FR GB GR HU IE IT LI LU MC NL PL PT RO SE SI SK TR**

(30) Priority: **07.08.2003 JP 2003288854**

(43) Date of publication of application:
**09.03.2005 Bulletin 2005/10**

(73) Proprietor: **JAPAN GORE-TEX, INC.**
**Setagaya-ku**
**Tokyo-To 156 (JP)**

(72) Inventor: **Suzuki, Kenji,**
**Japan Gore-Tex, Inc.**
**Tokyo 15600 (JP)**

(74) Representative: **Shanks, Andrew et al**
**Marks & Clerk LLP**
**19 Royal Exchange Square**
**Glasgow**
**G1 3AE (GB)**

(56) References cited:
**EP-A- 0 335 195       WO-A-00/23510**
**US-A- 5 523 181       US-A- 5 597 512**
**US-B1- 6 242 135**

**Description**

The present invention relates to a solid polymer electrolyte membrane for manufacturing an electrochemical cell used in a solid polymer electrolyte fuel cell or the like, and relates to a fuel cell that uses this solid polymer electrolyte membrane.

**BACKGROUND OF THE INVENTION**

Fuel cells are classified as phosphoric acid type, molten carbonate type, solid oxide type, solid polymer electrolyte type, and other types according to the type of electrolyte. Among these, solid polymer electrolyte fuel cells use an ion exchange resin that is a solid polymer electrolyte membrane as the electrolyte, have electrodes joined to both sides of the membrane, and have such main advantages as the following:

(1) The operating temperature thereof is relatively low, being approximately 100 to 120°C at the highest, and operation at room temperature is possible.
(2) The internal resistance of the fuel cell can be markedly reduced as a result of making the electrolyte membrane thin, and the fuel cell can operate at a high current density. The cell can therefore be made compact.
(3) A polymer electrolyte membrane is essentially impermeable to gas, so the operating pressure at the negative and positive electrodes can be arbitrarily set and differential pressure operation can be easily accomplished.

Due to such advantages as are described above, research is being promoted mainly concerning solid polymer electrolyte fuel cells as stationary power sources, power sources for mobile instruments, and power sources for mounting in an automobile.

Widely used styrene-divinylbenzene ion exchange resins (in which an ion exchange group is introduced to a styrene-divinylbenzene resin parent nucleus) have generally been used on a wide scale as solid polymer electrolyte membranes in the early phase of development. However, a styrene-divinylbenzene ion exchange resin is physically or chemically unstable with respect to the electrochemical effects or reactions occurring on the surface or in the interior of the solid polymer electrolyte membrane surface of a fuel cell, so a long service life for the cell cannot be obtained.

Methods that use a fluororesin have been proposed from the perspective of improving the service life of a fuel cell, and perfluorocarbons that have a sulfonic acid group, for example, as the ion exchange group have come to be used. This is because perfluorocarbon-type ion exchange resins have excellent durability, both mechanically and chemically, compared to the aforementioned styrene-divinyl ion exchange resin.

A solid polymer electrolyte membrane is also usually heated/hydrated when used as a fuel cell, and compression force is applied thereon in the membrane thickness direction. If the solid polymer electrolyte membrane has low mechanical strength, the membrane deforms and becomes thinner due to swelling, creeping, or the like. As a result, gas crossover occurs, and electrolyte performance declines.

Various methods have been proposed for enhancing the strength of a solid polymer electrolyte membrane while taking advantage of a fluororesin. Specifically, it is know to use a product in which an ion exchange resin is included in the porous spaces of drawn porous polytetrafluoroethylene as a solid polymer electrolyte membrane for a fuel cell. Inorganic particles could also be dispersed in an ion exchange resin to reinforce the ion exchange resin. However, because substances with no ion exchange capability (drawn porous polytetrafluoroethylene and inorganic particles) are included in the solid polymer electrolyte membrane in these methods, the electrical resistance of the solid polymer electrolyte membrane increases significantly.

Others have proposed including fine particles of silica in the ion exchange resin as a method of reducing the electrical resistance. This is because the electrical resistance can be reduced if the moisture content of the membrane is increased by the silica particles. However, when silica is pulverized, effects whereby the membrane is reinforced (resistance to membrane thinning, durability against gas permeation, and the like) cannot be obtained.

As described in detail above, adding silica particles yields adequate membrane reinforcing effects but produces enhanced electrical resistance when the particles are large. Using small particles reduces the electrical resistance but fails to deliver adequate membrane reinforcing effects. It is thus difficult to ensure both positive effects at the same time.

WO 00/23510 proposes a solid polymer electrolyte membrane comprising an ion exchange resin wherein chopped silica fibers and silica micro fibers are dispersed with the objective of improving dimensional stability without compromising the ionic conductivity and reactant gas cross-over parameters.

**SUMMARY OF THE INVENTION**

The present invention was developed in view of such drawbacks as the foregoing, and an object thereof is to provide a solid polymer electrolyte membrane in which both the mechanical strength (resistance to membrane thinning, durability against gas permeation, and the like) and electrical resistance are improved, and also to provide a fuel cell that uses this solid polymer electrolyte membrane.

As a result of concentrated investigation aimed at overcoming the above-mentioned drawbacks, the inventors perfected the present invention upon discovering that the drawbacks (low mechanical strength) of spherical silica with a small particle size, and the drawbacks (high electrical resistance) of spherical silica with a large particle size are entirely absent, and only the advantages of the two type of silica can be obtained when beaded silica is used. As a result, the mechanical strength of a solid polymer electrolyte membrane can be enhanced and its electrical resistance reduced.

Specifically, the solid polymer electrolyte membrane (membrane composed of at least an ion exchange resin) pertaining to the present invention has as its main characteristic that beaded silica is dispersed therein. The ratio of the ion exchange resin and the beaded silica (beaded silica/ion exchange resin) may be about 1 to 50 wt%, for example. The beaded silica preferably has a primary particle size of 50 nm or less as measured with the help of the BET method, and a particle size of 60 nm or more as measured with the help of dynamic light scattering. The solid polymer electrolyte membrane preferably contains a reinforcing material, and the reinforcing material is preferably a porous resin sheet. When the solid polymer electrolyte membrane is reinforced with a porous resin sheet, the ion exchange resin and the beaded silica are included in the pores in the resin sheet. The porous resin sheet is preferably a porous polytetrafluoroethylene resin membrane. The solid polymer electrolyte membrane of the present invention preferably has an ion exchange resin layer formed on the surface thereof. The effects of using beaded silica are prominent when the thickness of the solid polymer electrolyte membrane is 60 μm or less.

A fuel cell provided with the above-mentioned solid polymer electrolyte membrane is also included in the present invention.

## DESCRIPTION OF THE DRAWINGS

FIG. 1 is a graph showing the relationship between current density and electrical resistance when using the solid polymer electrolyte film of the working examples;

FIG. 2 is a graph showing the relationship between the operating time and the current density due to reaction of $H_2$ that has crossed over to the cathode when using the solid polymer electrolyte film of the working examples;

FIG. 3 is an electron micrograph of the small-grained colloidal silica; FIG. 4 is an electron micrograph of the surface portion of a solid polymer electrolyte film that contains small-grained silica;

FIG. 5 is an electron micrograph of beaded colloidal silica; and

FIG. 6 is an electron micrograph of the surface portion of a solid polymer electrolyte film that contains beaded silica.

## DETAILED DESCRIPTION OF THE INVENTION

The solid polymer electrolyte membrane of the present invention is characterized in that beaded silica is dispersed (included) therein. Small-grained silica is useful for improving electrical resistance but is incapable of improving mechanical strength, and large-grained silica is useful for improving mechanical strength but is incapable of improving electrical resistance, whereas beaded silica is capable of improving both electrical resistance and mechanical strength.

The aforementioned beaded silica is obtained as a result of the coupling of a plurality of substantially spherical silica particles. The beaded silica is commercially available from Nissan Chemical Industries (Ltd.) and the like, and the details thereof are described in JP (Kokai) No. H1-317115, H7-118008, and other publications. The characteristics of the beaded silica from these publications are summarized below.

The beaded silica is prepared as colloidal silica. When the material is prepared as colloidal silica, the particle size (usually referred to as primary particle size), calculated according to the equation $D_2 = 2720/S$ from the specific surface area $S\,m^2/g$ measured with the help of the usual BET method (nitrogen gas absorption method), corresponded to a $D_2$ value of about 6 to 60 nm (about 10 to 25 nm in the commercial product).

When the material is prepared as colloidal silica, the particle size $D_1$, as measured with the help of dynamic light scattering, is about 40 to 500 nm (about 80 to 150 nm in the commercial product).

The method of measuring the particle size with the help of dynamic light scattering is described on page 4814 of Journal of Chemical Physics, 1972, Vol. 57 No. 11, and this measurement can be performed by means of a commercially available N4 device manufactured by Coulter Inc. U. S. A.

The ratio of the particle size $D_1$ and the particle size D2 ($D_1/D_2$) indicates the degree of extension of the beaded silica, and is about 5 to 30. According to observation with the help of an electron microscope, the product has a uniform size of about 5 to 40 nm and has extension in one plane only. However, this does not mean that the extension is purely in the same plane in a strictly mathematical sense, but that the properties of silica sols having a three-dimensional mesh structure or a similar structure are not demonstrated.

This beaded silica is commercially available under the product name "SNO-TEX PS" from Nissan Chemical Industries (Ltd.), and it is preferred to use this product.

The details of why beaded silica exhibits only the advantages of small-grained and large-grained spherical silica are unclear, but a theory thereof is as follows. (Applicants are not intending to limit the invention to or by this theory.) The primary particle size (particle size as measured with the help of the BET method) of the beaded silica determines the electrical resistance of the solid polymer electrolyte membrane, and the particle size as measured with the help of dynamic light scattering determines the mechanical strength (resistance to membrane thinning, durability against gas permeation, and the like) of the solid polymer electrolyte membrane. Specifically, beaded silica that has a primary particle size (as measured with the help of the BET method) of the same value as small-grained spherical silica can be equated with small-grained spherical silica from the perspective of electrical resistance, and beaded silica whose particle size (as measured with the help of dynamic light scattering) has the same value as the primary particle size (as measured with the help of the BET method) of large-grained spherical silica can be equated with large-grained spherical silica from the perspective of mechanical strength (resistance to membrane thinning, durability against gas permeation, and the like).

The primary particle size and the particle size as measured with the help of dynamic light scattering of the beaded silica should therefore be selected with consideration of the primary particle sizes of the small-grained spherical silica and the large-grained spherical silica in order to use both the excellent low electrical resistance obtained when the small-grained spherical silica is used and the excellent mechanical strength obtained when the large-grained spherical silica is used to improve the solid polymer electrolyte membrane. Specifically, it is recommended that a beaded silica be used that has a primary particle size of about 50 nm or less, for example, (preferably 40 nm or less, and more preferably 30 nm or less) and a particle size according to dynamic light scattering of about 60 nm or more, for example, (preferably 70 nm or more, and more preferably 80 nm or more). The minimum primary particle size is about 10 nm if it is assumed that the above-mentioned "SNO-TEX PS" is used, but a smaller product is preferably used as smaller-grained products become commercially available in the future, and the minimum size is not particularly limited. The maximum particle size according to dynamic light scattering is also about 150 nm if it is assumed that the above-mentioned "SNO-TEX PS" is used, but a larger product is preferably used as larger-grained products become commercially available in the future, and the maximum size is not particularly limited.

The beaded silica may be appropriately combined with spherical silica (small-grained spherical silica, large-grained spherical silica, and the like) as needed, and the electrolyte membrane improvement characteristics thereof may be finely adjusted accordingly.

The admixed quantity of the beaded silica can be appropriately set according to the type, ratio, desired properties, and other attributes of the ion exchange resin used as the solid polymer electrolyte membrane; the porous resin sheet (described in detail hereinafter) that can be used together with the ion exchange resin; and the like. The admixed quantity of beaded silica may be set such that the ratio of the ion exchange resin and the beaded silica (beaded silica/ion exchange resin) ranges from about 1 wt% or higher (preferably 3 wt% or higher, and more preferably 5 wt% or higher) to 50 wt% or lower (preferably 30 wt% or lower, and more preferably 20 wt% or lower).

On the other hand, the solid polymer electrolyte membrane that is the subject of the present invention is not particularly limited insofar as it is a polymer membrane that can contain beaded silica. This is because an object of the present invention is to modify a solid polymer electrolyte membrane by means of beaded silica as described above. Specifically, the solid polymer electrolyte membrane is not particularly limited insofar as it is composed of at least an ion exchange resin.

The solid polymer electrolyte membrane is generally used in a sheeted form, but a cylindrical form thereof may also be used. When a cylindrical solid polymer electrolyte membrane is used in a fuel cell or other electrochemical device, an electrode layer is formed on the external surface and the internal surface of the cylinder.

A reinforcing material can be contained in the membrane of the solid polymer electrolyte membrane of the present invention. As a result of including a reinforcing material, the mechanical strength of the solid polymer electrolyte membrane can be further enhanced in conjunction with the use of the beaded silica described previously. Reinforcing materials other than the porous resin sheet described hereinafter include fibrous substances. Preferred materials made from fibrous substances include various fluororesin fibers, glass fibers, or other materials that possess chemical resistant properties. The fibers are preferably as thin as possible, with a diameter of 0.3 $\mu$m or less, for example, and fibers can be used that have a length of several hundred micrometers to several micrometers. This type of fibrous substance is preferably used in an evenly dispersed state in the solid polymer electrolyte membrane.

The preferred solid polymer electrolyte membrane includes a membrane in which an ion exchange resin is reinforced with the help of a porous resin sheet. When a porous resin sheet is used, the beaded silica and the ion exchange resin are contained in the pores. The preferred solid polymer electrolyte membrane includes one in which one of either (or both) the ion exchange resin or the porous resin sheet that may be used together with this ion exchange resin is formed from fluororesin. Durability (physical durability and chemical durability), mechanical strength, and the like can be further improved if these preferred solid polymer electrolyte membranes are used.

The resins constituting the solid polymer electrolyte membrane will be described in detail hereinafter.

Ion exchange resins can be classified into non-fluororesin-type ion exchange resins and fluororesin-type ion exchange resins. Non-fluororesin-type ion exchange resins include polyalkylene oxides, polyvinyl alcohols, styrene-divinylbenzene ion exchange resins, and the like, and these may also form metallic salts. Preferred non-fluororesin-type ion exchange resins include polyalkylene oxide-alkali metal salt complexes (obtained as a result of polymerizing an ethylene oxide oligomer in the presence of lithium chlorate or another alkali metal salt, for example). Fluororesin-type ion exchange resins include perfluorosulfonic acid resins, perfluorocarboxylic acid resins, and the like. The preferred fluororesin-type ion exchange resin is a perfluorocarboxylic acid resin. Perfluorocarboxylic acid resins are commercially available under the product names "Nafion" (Du Pont Inc.), "Aciplex" (Asahi Kasei (Inc.)), "Flemion" (Asahi Gas (Ltd,)), and the like, and these products may be used.

A woven cloth or nonwoven cloth formed from a polymer fiber or polymer staple fiber may be used as the porous resin sheet, and a porous resin sheet may be used. The porous resin sheet may be manufactured by means of expanding a resin and forming continuous voids, for example, and may also be manufactured as a result of eluting the island portions of a resin with a sea-island structure that has continuous island portions. Depending on the properties of the resin, a porous structure may also be formed by means of stretching. These porous resin sheets may be non-fluororesins or fluororesins.

When the porous resin sheet is formed from a fluororesin, a porous polytetrafluoroethylene (PTFE) resin sheet can be used appropriately as the porous resin. The porous polytetrafluoroethylene resin sheet can be manufactured by means of stretching a paste-extruded PTFE resin sheet. The details of this process are disclosed, for example, in JP (Kokoku) No. S51-18991. The stretching may be uniaxial or biaxial. A uniaxially stretched porous PTFE resin is characterized in that narrow island-shaped nodes (folded crystals) that are substantially orthogonal to the stretching direction are present therein on a microscopic level, and that a lattice of fibrils (linear molecular bundles obtained by means of the stretching-induced melting and drawing of folded crystals) is oriented in the stretching direction so as to link the nodes. A biaxially stretched porous PTFE resin is characterized on the microscopic level in that the fibrils are spread out in radial fashion, the nodes connecting the fibrils are scattered in island fashion, and a fibrous structure is formed with a spider web pattern in which there are numerous spaces formed by the fibrils and nodes. This type of porous PTFE resin sheet is commercially available under the product name "Gore-Tex" (Japan Gore-Tex (Ltd.)), and this product may be used.

A particularly preferred solid polymer electrolyte membrane includes one in which an ion exchange resin (fluorinated or non-fluorinated ion exchange resin) is reinforced with the help of a porous fluororesin sheet (porous PTFE resin sheet). When a porous PTFE resin sheet is combined with an ion exchange resin, the void content of the porous PTFE resin sheet can be appropriately adjusted according to the draw ratio and the like, and is about 30% or higher (preferably 50% or higher, and more preferably 70% or higher) and 95% or lower (preferably 93% or lower, and more preferably 90% or lower), for example. The average pore diameter of the porous PTFE resin sheet can also be appropriately adjusted according to the draw ratio and the like, and is about 0.05 to 5 $\mu$m, preferably 0.5 to 1 $\mu$m, for example. The larger the void content and the average pore diameter, the easier it is to increase the content ratio of the ion exchange resin.

The aforementioned void content can be calculated on the basis of the equation below as a result of using bulk density D, which is found by measuring the mass W of the porous PTFE resin sheet and the apparent volume V containing the pores (D = W/V; unit: g/cm$^3$), and the density $D_{standard}$ when there are no pores formed (2.2 g/cm$^3$ in the case of PTFE resin).

$$\text{Void content (\%)} = (1 - (D/D_{standard})) \times 100$$

The average pore diameter can also be measured using a Coulter Porometer manufactured by Coulter Electronics.

The ratio of the porous PTFE resin sheet and the ion exchange resin can be appropriately adjusted according to the desired properties. The higher the ratio of the porous PTFE resin sheet, the higher the strength of the solid polymer electrolyte membrane. The higher the ratio of the ion exchange resin, the lower the electrical resistance. The ratio of the porous PTFE resin sheet and the ion exchange resin (porous PTFE resin/ion exchange resin) may be selected from the range of about 5/95 to 50/50 (weight ratio), preferably about 10/90 to 30/70 (weight ratio), and more preferably about 15/85 to 25/75 (weight ratio), for example.

The thickness of the solid polymer electrolyte membrane is not particularly limited, and may be 60 $\mu$m or less (particularly about 50 $\mu$m or less), for example. This is because the lower the membrane thickness, the more likely it is for the mechanical strength to decrease, so mechanical strength improvement effects by means of beaded silica are earnestly pursued. The thickness of the solid polymer electrolyte membrane is usually about 5 $\mu$m or more (10 $\mu$m or more, and particularly 20 $\mu$m or more, for example).

The solid polymer electrolyte membrane is also not limited to the above-mentioned base portion (ion exchange resin, beaded silica, and optional porous resin sheet), and an ion exchange resin layer (layer composed of a second ion exchange resin) may also be formed on the surface thereof, for example. This ion exchange resin layer preferably contains no silica or other inorganic particles, and is useful for increasing the surface smoothness of the solid polymer electrolyte membrane and enhancing the bond between the electrolyte membrane and the electrode. The second ion exchange resin that constitutes the ion exchange resin layer may be selected from the same range as the ion exchange resin that may be used in the aforementioned base portion. The type of second ion exchange resin is preferably paired with the type of ion exchange resin used in the base portion. The thickness of the ion exchange resin layer is about 1 to 10 $\mu$m, preferably about 3 to 7 $\mu$m, and more preferably about 4 to 6 $\mu$m, for example.

The solid polymer electrolyte membrane may also contain various components as needed; for example, Pt or the like.

Electrical resistance and mechanical strength can both be improved when beaded silica is included in a solid polymer electrolyte membrane as described above. Electrical resistance and mechanical strength are both particularly excellent when the solid polymer electrolyte membrane is composed of a porous PTFE resin sheet, an ion exchange resin, and beaded silica. The solid polymer electrolyte membrane obtained by means of the present invention is therefore extremely useful in the manufacture of a fuel cell.

The solid polymer electrolyte membrane of the present invention contains beaded silica, so the electrical resistance thereof is reduced, and the mechanical strength is increased. It is therefore suited for use in a fuel cell, a sensor, an ozone generating device, a device for generating hydrogen or oxygen by way of electrolysis, a separator for an electrochemical device that involves proton movement, a dehumidifying membrane, a humidifying membrane, and the like in the same manner as a conventional, publicly known solid polymer electrolyte film.

The present invention will be described in further detail hereinafter using one example and three comparative examples, but the present invention is, of course, not limited by the working examples below, and may be appropriately modified in a range that can conform to the essence of the present invention described previously and hereinafter, and such modifications are encompassed by the technological scope of the present invention.

Comparative Examples 1 through 3 and Example 4

The colloidal silica shown in Table 1 below was added to an ion exchange resin solution (solvent: mixture of 1-propanol and water; resin: perfluorosulfonic acid (Du Pont "Nafion"); concentration: 15 wt%) to give a silica (solid content)/ion exchange resin (solid content) ratio of 10 wt%, and the ingredients were thoroughly stirred/dispersed.

A stretched porous PTFE resin sheet with a membrane thickness of 20 $\mu$m, a void content of 80% by volume, and an average pore diameter of 0.5 $\mu$m (product name: "Gore-Tex"; manufactured by Japan Gore-Tex Inc.) was impregnated with the above-mentioned silica-dispersed ion exchange resin solution, the product was placed in an oven at a temperature of 100°C, and the solvent was evaporated. The ion exchange resin solution described above before addition of the colloidal silica was applied again onto both sides of the resultant membrane, the product was placed in an oven at a temperature of 100°C, and the solvent was evaporated, whereby a solid polymer electrolyte membrane was obtained. This solid polymer electrolyte membrane had an overall thickness of 30 $\mu$m, the thickness of the ion exchange resin layer on the surface thereof was 5 $\mu$m, the ratio of the ion exchange resin and the silica (silica/ion exchange resin) was 10 wt%, and the ratio of the porous PTFE resin and the ion exchange resin (porous PTFE resin/ion exchange resin) was 15/85 (weight ratio).

Table 1

| Working Example | Silica name | Primary grain size (BET method) | Grain size measured with the help of dynamic light scattering |
|---|---|---|---|
| Comparative Example 1 | No silica added | - | - |
| Comparative Example 2 | Small-grained spherical silica *1 | 10 to 20 nm | - |
| Comparative Example 3 | Large-grained spherical silica *2 | 70 to 100 nm | - |

(continued)

| Working Example | Silica name | Primary grain size (BET method) | Grain size measured with the help of dynamic light scattering |
|---|---|---|---|
| Example 4 | Beaded silica *3 | 18 to 25 nm | 80 to 150 nm |
| *1: Product name: "SNO-TEX IPA-ST"; manufactured by Nissan Chemical Industries (Inc.) | | | |
| *2: Product name: "SNO-TEX ST-ZL"; manufactured by Nissan Chemical Industries (Inc.) | | | |
| *3: Product name: "SNO-TEX PS-MO"; manufactured by Nissan Chemical Industries (Inc.) | | | |

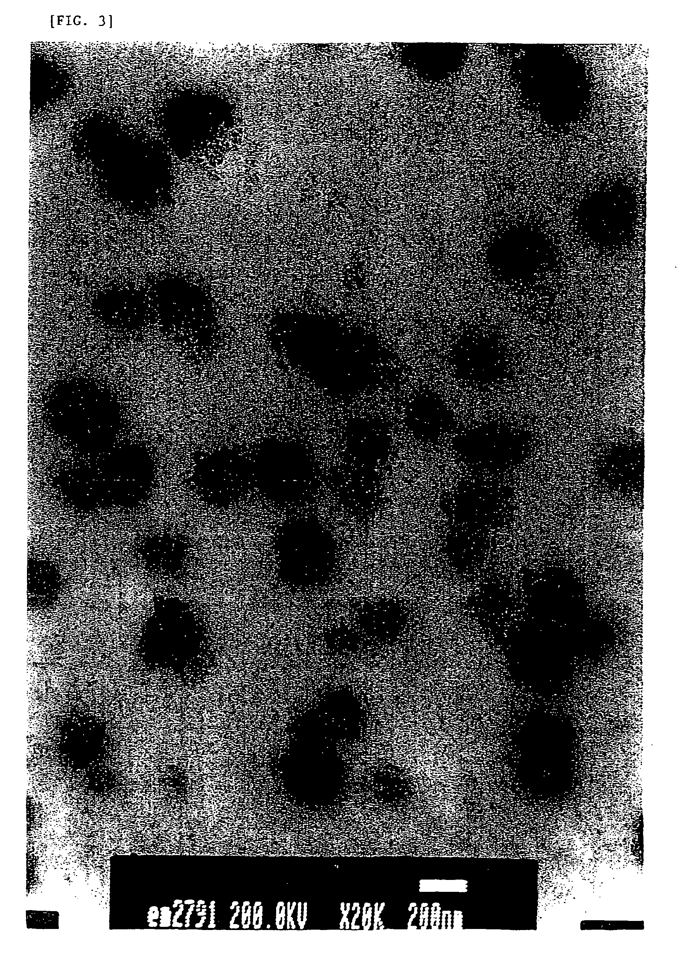

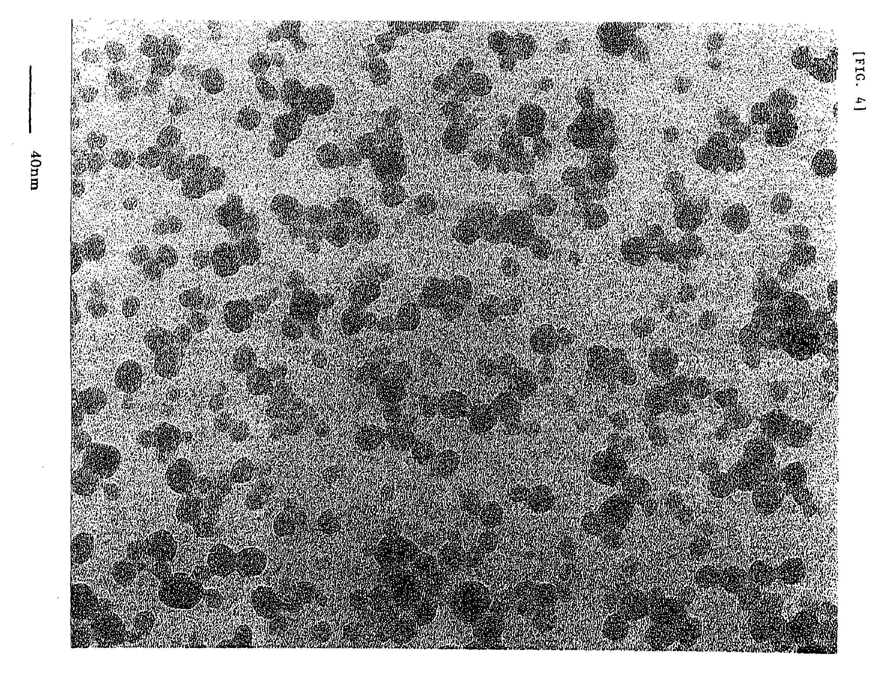

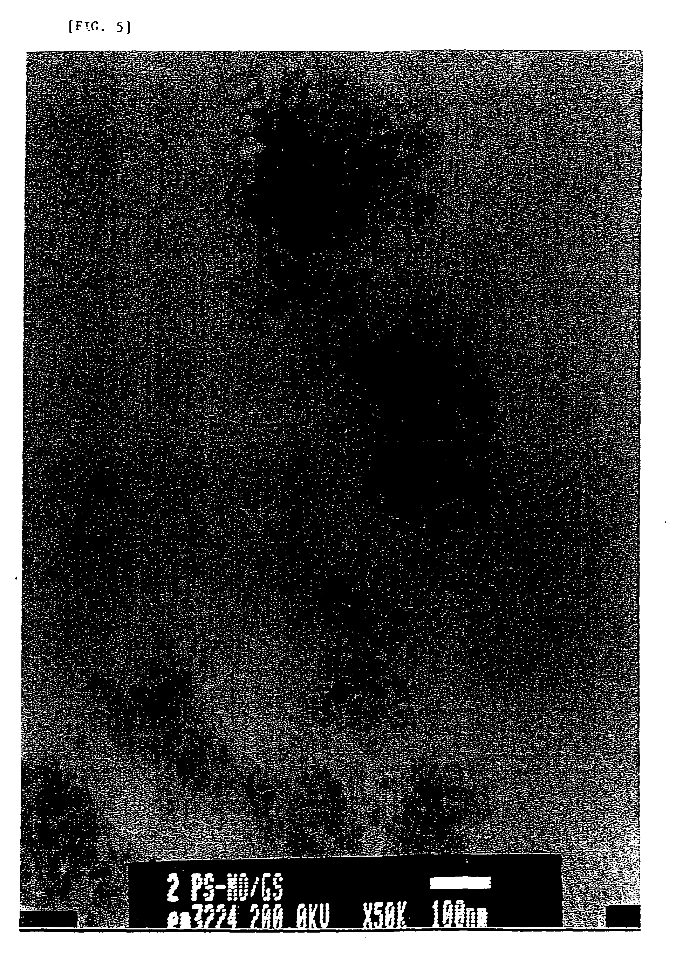

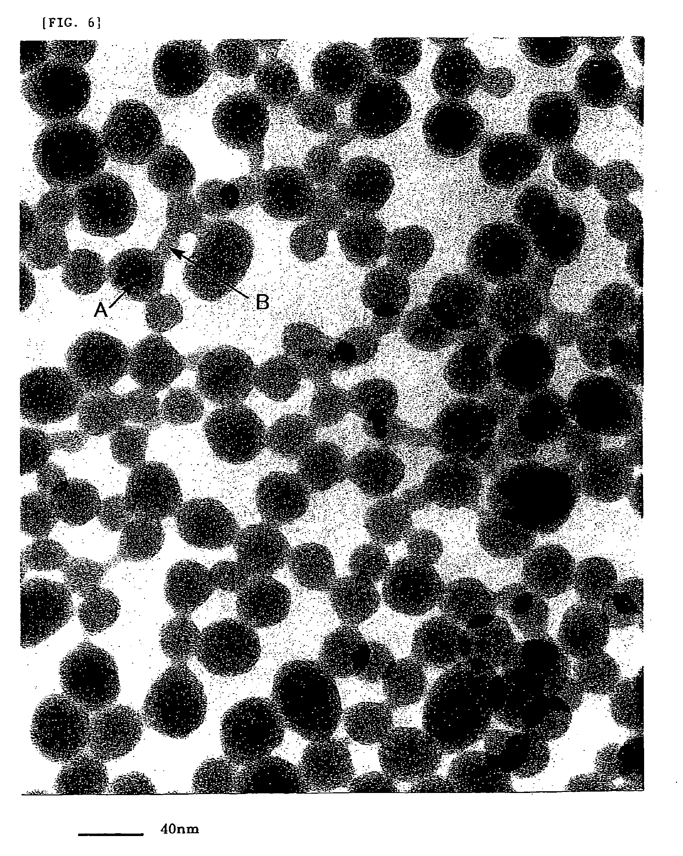

Electron micrographs of the colloidal silica used and the resultant solid polymer electrolyte membranes are shown in FIGS. 3 through 6. FIG. 3 shows small-grained colloidal silica, and FIG. 4 shows the solid polymer electrolyte membrane manufactured using this small-grained colloidal silica. FIG. 5 shows beaded colloidal silica, and FIG. 6 shows the solid polymer electrolyte membrane manufactured using this beaded colloidal silica. The beaded colloidal silica clearly differs in structure from usual colloidal silica, and is specifically characterized in that a plurality of silica particles A is connected via the connecting portions B, as is apparent from FIG. 6. The aforementioned connecting portions B are not present in normal colloidal silica, as is apparent from FIG. 4.

The properties of the resultant solid polymer electrolyte membranes were evaluated as described below.

[Resistance to membrane thinning]

After stacking seven layers of the solid polymer electrolyte membrane to a thickness of approximately 200 $\mu$m, this laminated solid polymer electrolyte membrane was set in a thermomechanical analysis (TMA) device manufactured by Seiko Instruments (Inc.). A compression probe was placed on the laminated solid polymer electrolyte membrane, and the temperature was raised from room temperature to 80°C at a rate of 50 degrees per minute and maintained for two hours in a dry atmosphere while a constant load (10 N/cm$^2$) was placed on the membrane. The percentage of dimensional change was then calculated on the basis of the equation below.

$$\text{Percent dimensional change (\%) = (Membrane thickness before testing} -$$
$$\text{Membrane thickness after testing)/Membrane thickness before testing} \times 100$$

[Cell electrical resistance]

A gas diffusion electrode ("PRIMEA™ 5510," manufactured by Japan Gore-Tex (Inc.)) was bonded to both sides of the solid polymer electrolyte membrane, and a membrane/electrode assembly (MEA) was fabricated. A cell unit for a fuel cell was assembled using this MEA in accordance with the usual method, humidified hydrogen (dew point: 60°C) was fed to one side of the cell, humidified air (dew point: 60°C) was fed to the other side, and the cell was operated at a temperature of 85°C and a gas usage rate of 80% hydrogen and 40% oxygen. The current was varied by means of changing the amount of resistance of the load device, and the electrical resistance of the cell at that time was measured with the help of the current interrupt method.

[Durability against hydrogen gas permeation (accelerated test)]

A cell unit for a fuel cell was assembled in the same manner as described above, humidified hydrogen (dew point: 83°C) was fed to one surface of the cell, air (dew point: 83°C) was fed to the other side, the cell was continuously operated at a gas usage rate of 83% hydrogen and 50% oxygen, a cell temperature of 90°C, an operating current density of 0.8 A/cm$^2$, and a gas pressure of 0.1 MPa. The air and gas were supplied to both electrodes until operation was no longer possible, and the change in current density due to reaction of $H_2$ that had crossed over to the cathode was measured. This increase in current density indicates an increased quantity of hydrogen gas transmitted to the negative electrode side.

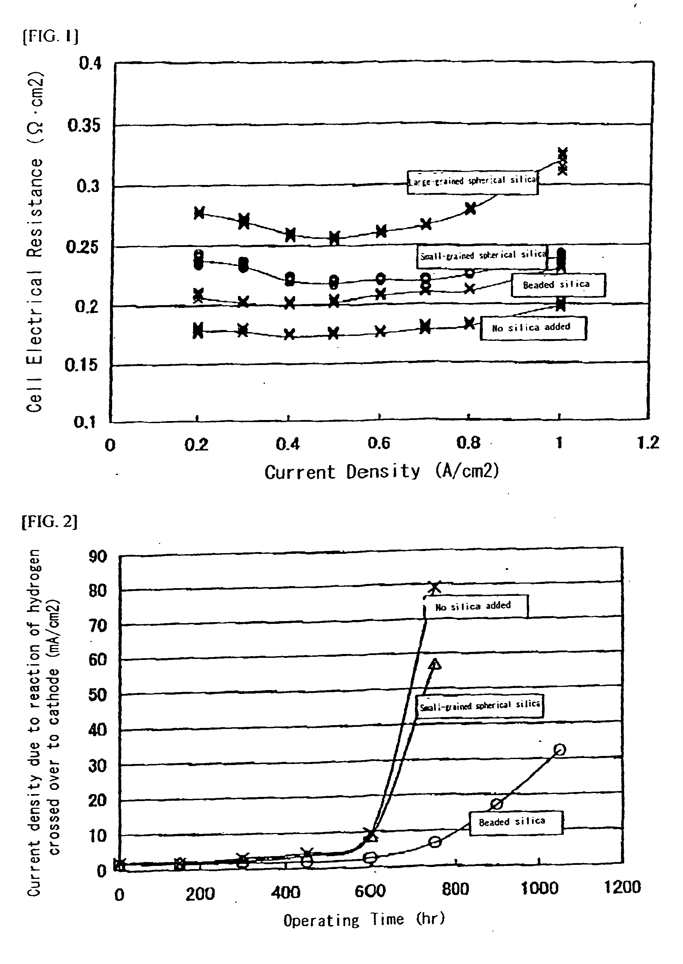

The results are shown in Table 2 and in FIGS. 1 and 2.

Table 2

| Working Example | Silica name | Film thinning resistance properties | | | Cell electrical resistance ($\Omega \cdot cm^2$) | | Durability against hydrogen gas permeation | | |
|---|---|---|---|---|---|---|---|---|---|
| | | Percentage of dimensional change (%) | Relative value (%) | Evaluation | Measured result | Evaluation | Operating time at which current density due to reaction of $H_2$ crossed-over to the cathode exceeded 10 mA/cm$^2$ | Operable time | Evaluation |
| 1 | No silica added | 8.6 | 100 | Fail | 0.17 to 0.20 | pass | Approx. 600 hr | Approx. 700 hr | fail |
| 2 | Small-grained spherical silica | 8.7 | 101 | Fail | 0.22 to 0.24 | pass | Approx. 600 hr | Approx. 700 hr | fail |
| 3 | Large-grained spherical silica | 5.7 | 66 | Pass | 0.25 to 0.33 | fail | - | - | - |
| 4 | Beaded silica | 5.8 | 67 | Pass | 0.20 to 0.23 | pass | Approx. 800 hr | Approx. 1100 hr | pass |
| 1, 2 and 3 are comparative examples | | | | | | | | | |

Electrical Resistance:

As is clear from Tables 1 and 2 and from FIG. 1, the electrical resistance increases when large-grained spherical silica with a large primary particle size is used. In contrast, the electrical resistance can be kept low when small-grained silica or beaded silica with a small primary particle size is used. The particle size of beaded silica is equivalent to that of large-grained silica when measured with the help of dynamic light scattering, but the electrical resistance is kept as low as with small-grained silica. It is apparent from these results that the electrical resistance is determined by the primary particle size of the beaded silica, and that the magnitude of the resistance is equivalent to that of small-grained silica with the same primary particle size.

Mechanical Strength (resistance to membrane thinning, durability against hydrogen gas permeation):

As is clear from Tables 1 and 2 and from FIG. 2, the mechanical strength (resistance to membrane thinning and durability against hydrogen gas permeation) is reduced when small-grained spherical silica with a small primary particle size is used. In contrast, the mechanical strength increases when large-grained silica or beaded silica with a large primary particle size is used. The particle size of beaded silica is equivalent to that of small-grained silica when compared on the basis of primary particle size, but the mechanical strength is as good as with large-grained silica. It is apparent from these results that the mechanical strength is determined by the particle size of the beaded silica as measured with the help of dynamic light scattering, and the magnitude of the mechanical strength is equivalent to that of large-grained silica with the same primary particle size, as measured with the help of dynamic light scattering.

As is clear from the above description, when beaded silica is used, the drawbacks of small-grained spherical silica and large-grained spherical silica do not occur, and only the respective advantages thereof are manifested, and both electrical resistance and mechanical strength (resistance to membrane thinning and durability against hydrogen gas permeation) can be improved.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A solid polymer electrolyte membrane comprising at least an ion exchange resin; said solid polymer electrolyte membrane **characterized in that** beaded silica is dispersed in the solid polymer electrolyte membrane, the beaded silica when in the form of colloidal silica having a primary particle size of 50 nm or less as measured by BET method, and a particle size of 60 nm or more as measured by dynamic light scattering.

2. The polymer electrolyte membrane according to claim 1, wherein the ratio of the ion exchange resin and the beaded silica (beaded silica/ion exchange resin) is 1 to 50 wt%.

3. The solid polymer electrolyte membrane according to claims 1 or 2, wherein the solid polymer electrolyte membrane comprises a reinforcing material.

4. The solid polymer electrolyte membrane according to claim 3, wherein the reinforcing material comprises a porous resin sheet, and the ion exchange resin and the beaded silica are included in the pores in the resin sheet.

5. The solid polymer electrolyte membrane according to claim 4, wherein the porous resin sheet comprises a porous polytetrafluoroethylene resin sheet.

6. The solid polymer electrolyte membrane according to any of claims 1 to 5, further comprising an ion exchange resin layer formed on the surface thereof.

7. The solid polymer electrolyte membrane according to any of claims 1 to 6, wherein the thickness of the solid polymer electrolyte membrane is 60 $\mu$m or less.

8. A fuel cell comprising the solid polymer electrolyte membrane according to any of claims 1 to 7.

**Patentansprüche**

1. Festpolymerelektrolytmembran, umfassend mindestens ein Ionenaustauschharz; wobei die Festpolymerelektrolytmembran **dadurch gekennzeichnet ist, daß** perlenförmiges Siliciumdioxid in der Festpolymerelektrolytmembran dispergiert ist, wobei das perlenförmige Siliciumdioxid, wenn in der Form von kolloidalem Siliciumdioxid, eine primäre Teilchengröße von 50 nm oder weniger, wie gemessen durch das BET-Verfahren, und eine Teilchengröße von 60 nm oder mehr, wie gemessen durch dynamische Lichtstreuung, hat.

2. Polymerelektrolytmembran gemäß Anspruch 1, wobei das Verhältnis von dem Ionenaustauschharz und dem perlenförmigen Siliciumdioxid (perlenförmiges Siliciumdioxid/Ionenaustauschharz) 1 bis 50 Gew.-% beträgt.

3. Festpolymerelektrolytmembran gemäß den Ansprüchen 1 oder 2, wobei die Festpolymerelektrolytmembran ein verstärkendes Material umfaßt.

4. Festpolymerelektrolytmembran gemäß Anspruch 3, wobei das verstärkende Material ein poröses Harzflächengebilde umfaßt und das Ionenaustauschharz und das perlenförmige Siliciumdioxid in die Poren in dem Hanflächengebilde eingeschlossen sind.

5. Festpolymerelektrolymembran gemäß Anspruch 4, wobei das poröse Harzflächengebilde ein poröses Polytetrafluorethylenharzflächengebilde umfaßt.

6. Festpolymerelektrolytmembran gemäß einem der Ansprüche 1 bis 5, weiterhin umfassend eine Ionenaustauschlsarcschicht, erzeugt auf der Oberfläche davon.

7. Festpolymerelektrolytmembran gemäß einem der Ansprüche 1 bis 6, wobei die Dicke der Festpolymerelektrolytmembran 60 $\mu$m oder weniger beträgt.

8. Brennstoffzelle, umfassend die Festpolymerelektrolytmembran gemäß einem der Ansprüche 1 bis 7.


**Revendications**

1. Membrane à électrolyte polymère solide comprenant au moins une résine échangeuse d'ions; ladite membrane à électrolyte polymère solide étant **caractérisée en ce que** de la silice sous forme de chaîne de perles est dispersée dans la membrane à électrolyte polymère solide, la silice sous forme de chaîne de perles lorsqu'il s'agit de silice colloïdale ayant une taille de particules primaires de 50 nm ou moins telle que mesurée par la méthode BET, et une taille de particules de 60 nm ou moins telle que mesurée par diffusion dynamique de la lumière.

2. Membrane à électrolyte polymère selon la revendication 1, dans laquelle le rapport de la résine échangeuse d'ions et de la silice sous forme de chaîne de perles (silice sous forme de chaîne de perles/résine échangeuse d'ions) est de 1 à 50% en poids.

3. Membrane à électrolyte polymère solide selon les revendications 1 ou 2, dans laquelle la membrane à électrolyte polymère solide comprend un matériau de renfort.

4. Membrane à électrolyte polymère solide selon la revendication 3, dans laquelle le matériau de renfort comprend une feuille de résine poreuse, et la résine échangeuse d'ions et la silice sous forme de chaîne de perles sont incluses dans les pores dans la feuille de résine.

5. Membrane à électrolyte polymère solide selon la revendication 4, dans laquelle la feuille de résine poreuse comprend une feuille de résine de polytétrafluoroéthylène poreuse.

6. Membrane à électrolyte polymère solide selon l'une quelconque des revendications 1 à 5, comprenant en outre une couche de résine échangeuse d'ions formée sur sa surface.

7. Membrane à électrolyte polymère solide selon l'une quelconque des revendications 1 à 6, dans laquelle l'épaisseur de la membrane à électrolyte polymère solide est de 60 $\mu$m ou moins.

8. Pile à combustible comprenant la membrane à électrolyte polymère solide selon l'une quelconque des revendications 1 à 7.

[FIG. 1]

[FIG. 2]

[FIG. 3]

[FIG. 4]

———— 40nm

[FIG. 5]

[FIG. 6]

40nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0023510 A

- JP S5118991 B

**Non-patent literature cited in the description**

- *Journal of Chemical Physics,* 1972, vol. 57 (11), 4814